# EUROPÄISCHE PATENTANMELDUNG

(11) **EP 2 244 221 A1**
(43) Veröffentlichungstag der Anmeldung: **27.10.2010**
(21) Anmeldenummer: 09016014.4
(22) Anmeldetag: 24.12.2009
(51) Int. Cl.: G06Q 30/00

(54) **Rechnersystem für die Bereitstellung eines Sportprogamms für entfernte Nutzer**

(30) Priorität: 22.04.2009 DE 102009018312
(71) Anmelder: Eckardt, Manuel, 35781 Weilburg (DE)
(72) Erfinder: Eckardt, Manuel, 35781 Weilburg (DE)
(74) Vertreter: Ruckh, Rainer Gerhard

(57) **Zusammenfassung**

Die Erfindung betrifft ein Rechnersystem (1), welches eine Anzahl von über ein Rechnernetzwerk (3) verbundenen Rechnereinheiten umfasst. Wenigstens einer eine Hauptrechnereinheit (2) bildenden Rechnereinheit ist wenigstens eine Kamera (7) zugeordnet. Mittels der Kamera (7) ist ein von wenigstens einer Lehrperson durchgeführtes Sportprogramm aufnehmbar und über die Hauptrechnereinheit (2) und das Rechnernetzwerk (2) an weitere, Kundenrechnereinheiten (4) bildende Rechnereinheiten übertragbar. Die Rechnereinheiten weisen einerseits Mittel zur Darstellung des Sportprogramms auf. Andererseits sind den Kundenrechnereinheiten (4) Kontrollmittel zugeordnet, mittels derer Kontrollsignale generierbar sind, welche angeben, ob ein Benutzer der jeweiligen Kundenrechnereinheit (4) an dem Sportprogramm teilnimmt. Die Kontrollsignale sind von den jeweiligen Kundenrechnereinheiten (4) an die Hauptrechnereinheit (2) übertragbar.

## Beschreibung

Die Erfindung betrifft ein Rechnersystem.

Das Rechnersystem, auf welches sich die vorliegende Erfindung bezieht, wird allgemein für die Durchführung von Sportprogrammen, spezifisch zur Durchführung von Kursen im Bereich des Sports, eingesetzt.

Kurse im Bereich des Sports werden in vielfältigen Ausprägungen in Fitness-Studios angeboten. Generell ist dabei der Ablauf derart, dass eine Lehrperson zu vorgegebenen Zeiten in einem Fitness-Studio Kurse wie Step-Aerobic, Rückengymnastik und dergleichen anbietet, an welchem dann Interessenten vor Ort im Fitness-Studio teilnehmen können.

Da derartige Kurse zu verschiedenen Zeiten innerhalb eines Zeitraums wie einer Woche mehrfach angeboten werden, ist für die Kunden des Fitness-Studios ein breites Angebotsspektrum gegeben, was es den Kunden im Allgemeinen möglich macht, an diesen Kursen teilzunehmen.

Dennoch wird oftmals der Anfahrtsweg zum Fitness-Studio als unerwünscht aufwändig und umständlich empfunden. Auch besteht oftmals der Wunsch, ein Training nicht in der Gruppe durchzuführen, sondern individuell und ungestört für sich alleine.

Um derartigen Kundenwünschen entgegen zu kommen, ist es bekannt, auf Datenträgern wie DVD oder Videokassetten Sportprogramme, insbesondere Kurse im Fitnessbereich, die von einer Lehrperson durchgeführt werden; als Filme aufzuzeichnen. Ein Interessent kann dann den Datenträger erwerben und den Film auf einem Fernsehgerät oder dergleichen abspielen. Der Interessent kann dann die von der Lehrperson im Film gezeigten Übungen nachmachen. Hierbei fehlt jedoch jegliche Kontrolle durch das Lehrpersonal, das heißt der Interessent hat keine Rückmeldung, ob die Übungen von ihm richtig durchgeführt werden.

Der Erfindung liegt die Aufgabe zugrunde, einem möglichst großen Personenkreis ein Sportprogramm kontrollierbar zur Verfügung zu stellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Rechnersystem umfasst eine Anzahl von über ein Rechnernetzwerk verbundenen Rechnereinheiten. Wenigstens einer eine Hauptrechnereinheit bildenden Rechnereinheit ist wenigstens eine Kamera zugeordnet. Mittels der Kamera ist ein von wenigstens einer Lehrperson durchgeführtes Sportprogramm aufnehmbar und über die Hauptrechnereinheit und das Rechnernetzwerk an weitere, Kundenrechnereinheiten bildende Rechnereinheiten übertragbar. Die Rechnereinheiten weisen einerseits Mittel zur Darstellung des Sportprogramms auf. Andererseits sind den Kundenrechnereinheiten Kontrollmittel zugeordnet, mittels derer Kontrollsignale generierbar sind, welche angeben, ob ein Benutzer der jeweiligen Kundenrechnereinheiten an dem Sportprogramm teilnimmt. Die Kontrollsignale sind von den jeweiligen Kundenrechnereinheiten an die Hauptrechnereinheiten übertragbar.

Ein wesentlicher Vorteil der Erfindung besteht darin, dass über das Rechnernetzwerk von einer Lehrperson durchgeführte Sportprogramme, insbesondere Kurse wie sie in Fitness-Studios angeboten werden, einem breiten Personenkreis angeboten werden können. Dabei ist das Rechnernetzwerk bevorzugt vom Internet gebildet, so dass prinzipiell sogar eine weltweite Verbreitung möglich ist.

Die Benutzer der Kundenrechnereinheiten verfolgen dabei das von der Lehrperson durchgeführte und über die Hauptrechnereinheit an das Rechnernetzwerk ausgegebene Sportprogramm vorzugsweise live, das heißt die Benutzer der Kundenrechnereinheiten haben das von der Lehrperson durchgeführte und mit der Kamera aufgezeichnete Sportprogramm abgesehen von den Verarbeitungszeiten der Bilder der Kamera in den jeweiligen elektronischen Einheiten des Rechnersystems, zu den tatsächlichen Entstehungszeitpunkten verfügbar und können somit ohne zeitlichen Versatz aktuell an dem von der Lehrperson präsentierten Sportprogramm teilnehmen.

Durch die Verbreitung des Sportprogramms über das Rechnersystem wird als Vorteil für die Benutzer erhalten, dass diese nicht mehr gezwungen sind, vor Ort in einem Fitness-Studio oder dergleichen an einem Kurs der Lehrperson teilzunehmen. Vielmehr können die Benutzer vorzugsweise von zu Hause aus am jeweiligen Kurs teilnehmen, so dass eine oft unerwünschte Anfahrt zum Fitness-Studio entfällt. Umgekehrt entsteht für den Betreiber des Fitness-Studios der Vorteil, dass dieser einer Vielzahl von Personen Kurse mit Sportprogrammen anbieten kann ohne hierfür große Räumlichkeiten zur Verfügung stellen zu müssen.

Ein wesentlicher Aspekt der vorliegenden Erfindung besteht darin, dass in den einzelnen Kundenrechnereinheiten Kontrollsignale generiert werden, die eine Rückkopplung auf das von der Lehrperson durchgeführte und an die Kundenrechnereinheit ausgesandte Sportprogramm bilden.

Diese Kontrollsignale, die im einfachsten Fall von Kennungen des jeweiligen Benutzers, wie zum Beispiel Login-Daten, gebildet sein können, erlauben eine Identifikation des Benutzers, der am Sportprogramm teilnimmt.

Eine derartige Benutzeridentifikation ist insbesondere dann vorteilhaft beziehungsweise sogar erforderlich, wenn das von der Lehrperson durchgeführte Sportprogramm einen zertifizierten Kurs zur Gesundheitsförderung bildet, der von Krankenkassen finanziert wird. Als Voraussetzung für die Kostenübernahme muss die jeweilige Krankenkasse wissen, ob und wie oft die jeweilige Person an dem jeweiligen Kurs teilgenommen hat.

In einer besonders vorteilhaften Ausführungsform weist jede Kundenrechnereinheit wenigstens eine Kamera auf, mittels derer die Durchführung des Sportprogramms durch den Benutzer der Kundenrechnereinheit aufgezeichnet wird. Die hierbei in der Kamera generierten Bildfolgen sind als Kontrollsignale von der jeweiligen Kundenrechnereinheit an die Hauptrechnereinheit übertragbar.

Mit den an die Hauptrechnereinheit übermittelten Bildfolgen kann dort vorab, insbesondere von der Lehrperson selbst, kontrolliert werden, ob und in welchem Umfang das Sportprogramm von einem Benutzer einer Kundenrechnereinheit durchgeführt wird.

Für den vorgenannten Fall einer möglichen Kostenübernahme von Kursen durch eine Krankenkasse entsteht somit eine weitere Kontrollmöglichkeit derart, dass nicht nur überprüft wird, ob sich ein Benutzer an der jeweiligen Kundenrechnereinheit eingeloggt hat und das Sportprogramm aufgerufen hat. Vielmehr kann zusätzlich kontrolliert werden, ob der Benutzer tatsächlich am Sportprogramm teilnimmt.

Hierbei können im einfachsten Fall die von den Kundenrechnereinheiten an die Hauptrechnereinheiten übersandten Bildfolgen visuell ausgewertet werden.

Alternativ ist in der Hauptrechnereinheit eine Auswerteeinheit vorgesehen, in welcher aus den Kontrollsignalen Kenngrößen für den Umfang und/oder die Qualität der Durchführung des Sportprogramms durch einen Benutzer ableitbar sind.

Eine derartige Kenngröße kann die Anzahl von Personen, die als Benutzer einer Kundenrechnereinheit am Sportprogramm teilnehmen, sein. Eine weitere Kenngröße kann die Dauer sein, über welche eine Person als Benutzer einer Kundenrechnereinheit am Sportprogramm teilnimmt. Schließlich ist anhand von Bildverarbeitungsalgorithmen eine Bildanalyse denkbar, mittels derer ermittelt wird, ob und wie weit das Sportprogramm von einem Benutzer tatsächlich nachvollzogen wird.

Vorzugsweise weist die Hauptrechnereinheit Speichermittel auf, in welchen Kontrollsignale der Kundenrechnereinheit gespeichert werden.

Dabei können in der Hauptrechnereinheit die Kontrollsignale mehrerer Kundenrechnereinheiten simultan oder einzeln, das heißt seriell abgerufen werden.

In jedem Fall kann durch das Aussenden des Sportprogramms an die Kundenrechnereinheiten und die Generierung von Kontrollsignalen als Antwortgrößen ein interaktives System aufgebaut werden. Dieses interaktive System kann dann dahingehend ausgebaut werden, dass als Antwort auf von den Kundenrechnereinheiten empfangene Kontrollsignale von der Hauptrechnereinheit, insbesondere durch Dateneingaben der Lehrperson, besonders bevorzugt in Form von Sprachbefehlen, Instruktionen an die Kundenrechnereinheit ausgegeben werden.

Dabei ist insbesondere eine Betreuung der am Sportprogramm teilnehmenden Benutzer der Kundenrechnereinheit von der Hauptrechnereinheit aus möglich, wobei diese Betreuung besonders vorteilhaft von der Lehrperson selbst durchgeführt werden kann. Damit können die Benutzer der Kundenrechnereinheit, obwohl sie nicht vor Ort bei der Lehrperson das Sportprogramm durchführen, von dieser Lehrperson während des Ablaufs des Sportprogramms angewiesen und gegebenenfalls korrigiert werden.

Die Erfindung wird im Nachfolgenden anhand der Zeichnung erläutert. Es zeigt:

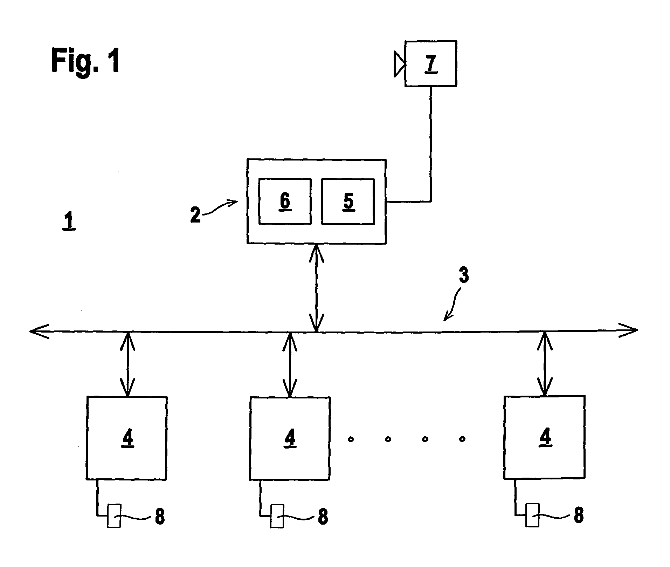

- Figur 1:: Ausführungsbeispiel des erfindungsgemäßen Rechnersystems.

Figur 1 zeigt ein Ausführungsbeispiel des erfindungsgemäßen Rechnersystems 1. Das Rechnersystem 1 umfasst im vorliegenden Fall eine erste Rechnereinheit die eine Hauptrechnereinheit 2 bildet. Diese Hauptrechnereinheit 2 ist über ein Rechnernetzwerk 3 mit mehreren weiteren Rechnereinheiten, die Kundenrechnereinheiten 4 bilden, über ein Rechnernetzwerk 3 verbunden. Dabei ist im vorliegenden Fall das Rechnernetzwerk 3 von Internet gebildet.

Die einzelnen Rechnereinheiten können bevorzugt von herkömmlichen Personalcomputern gebildet sein. Generell kann anstelle einer einzelnen Hauptrechnereinheit 2 auch ein System von mehreren Hauptrechnereinheiten 2 vorgesehen sein.

Die Hauptrechnereinheit 2 weist einen Mikroprozessor 5 auf. Alternativ kann ein System von Mikroprozessoren 5 vorgesehen sein. Weiterhin ist als Speichermittel eine Speichereinheit 6 vorgesehen, die allgemein auch von mehreren flüchtigen und nicht flüchtigen Speichern gebildet sein kann.

Die Hauptrechnereinheit 2 befindet sich im vorliegenden Fall in einem Fitness-Studio oder in einer vergleichbaren Anlage. In den Räumen des Fitness-Studios halten Lehrpersonen zu vorgegebenen Zeiten Fitness-Kurse ab, das heißt sie führen allgemein Sportprogramme durch, an welchen in einem Raum des Fitness-Studios selbst Trainierende teilnehmen.

Um darüber hinaus das Sportprogramm einem größerem Kreis an Personen außerhalb des Fitness-Studios zugänglich zu machen, ist die Hauptrechnereinheit 2 über das Rechnernetzwerk 3 an die Kundenrechnereinheit 4 angeschlossen. Zudem ist an die Hauptrechnereinheit 2 eine Kamera 7 angeschlossen. Anstelle einer einzelnen Kamera 7 kann auch ein System mit mehreren Kameras 7 vorgesehen sein. Zum Anschluss der Kamera 7 weist die Hauptrechnereinheit 2 eine geeignete, nicht gesondert dargestellte Schnittstelle auf.

Mit der Kamera 7 wird das von einer Lehrperson durchgeführte Sportprogramm aufgezeichnet. Die so generierten Bildfolgen des Sportprogramms werden in die Hauptrechnereinheit 2 eingelesen und in der Speichereinheit 6 der Hauptrechnereinheit 2 vorzugsweise nicht flüchtig gespeichert. Das gespeicherte Sportprogramm dient zu Dokumentationszwecken und bei Bedarf zur Überprüfung der Qualifikation der Lehrperson.

Weiterhin werden die aufgenommenen Bildfolgen des Sportprogramms live, das heißt ohne zeitlichen Verzug über das Rechnernetzwerk 3 an die Kundenrechnereinheit 4 übertragen. Ein Benutzer einer Kundenrechnereinheit 4 kann das Sportprogramm aufrufen und dann live verfolgen. Damit kann der Benutzer vor Ort an der Kundenrechnereinheit 4 als Teilnehmer die von der Lehrperson vorgeführten Übungen nachmachen, das heißt am Sportprogramm teilnehmen. Die Kundenrechnereinheiten 4 weisen hierzu in bekannter Weise Terminals und Bildschirme zur Wiedergabe des von der Lehrperson gezeigten Sportprogramms auf, wobei besonders vorteilhaft vertonte Bildfolgen übertragen werden, so dass der Benutzer einer Kundenrechnereinheit 4 auch die von der Lehrperson gegebenen Anweisungen hören kann.

Das Rechnersystem 1 gewährleistet dabei einen bidirektionalen Datenaustausch derart, dass die Kundenrechnereinheiten 4 nicht nur das Sportprogramm von der Hauptrechnereinheit 2 empfangen. Vielmehr werden in den Kundenrechnereinheiten 4 auch Antwortsignale hierauf generiert.

Erste Antwortsignale werden dadurch generiert, dass der Benutzer einer Kundenrechnereinheit 4 zum Empfang des Sportprogramms geeignete Kennungen, insbesondere Login-Daten, in die Kundenrechnereinheit 4 eingeben muss, die dann über das Rechnernetzwerk 3 an die Hauptrechnereinheit 2 übertragen werden. Dadurch erfolgt in der Hauptrechnereinheit 2 eine Identifizierung der Benutzer von Kundenrechnereinheiten 4, die an dem aktuell laufenden Sportprogramm teilnehmen. Diese Kennungen bilden erste Kontrollsignale, die von der jeweiligen Kundenrechnereinheit 4 selbst als Kontrollmittel generiert werden.

Anhand dieser Kontrollsignale kann bereits eine erste Kontrolle über die Hauptrechnereinheit 2 durchgeführt werden, wer am jeweiligen Sportprogramm teilnimmt.

Weiterhin sind als weitere Kontrollmittel den einzelnen Kundenrechnereinheiten 4 Kameras 8 zugeordnet, die im einfachsten Fall von handelsüblichen Webcams gebildet sein können. Die einzelnen Kameras 8 sind über Schnittstellen an die zugeordneten Kundenrechnereinheiten 4 angeschlossen.

Mit einer solchen Kamera 8 wird ein Film von einem Benutzer der Kundenrechnereinheit 4 aufgenommen, der die Übungen des von der Lehrperson vorgeführten Sportprogramms ausführt. Die so generierten Bildfolgen werden in die zugeordnete Kundenrechnereinheit 4 eingelesen und als weitere Kontrollsignale an die Hauptrechnereinheit 2 übertragen.

Sämtliche Kontrollsignale der einzelnen Kundenrechnereinheiten 4 werden in der Speichereinheit 6 der Hauptrechnereinheit 2 gespeichert. Je nach den Mitteln zur Präsentation beziehungsweise Darstellung der Kontrollsignale in der Hauptrechnereinheit 2 und je nach Anzahl der angeschlossenen Kundenrechnereinheiten 4 werden die Kontrollsignale von den einzelnen Kundenrechnereinheiten 4 an der Hauptrechnereinheit 2 simultan oder seriell angerufen und dann angezeigt.

Im einfachsten Fall erfolgt durch die Lehrperson oder einer weiteren Hilfsperson eine visuelle Kontrolle der Bildfolgen der einzelnen Kundenrechnereinheiten 4. Durch die visuelle Kontrolle kann die Lehrperson prüfen, ob die Benutzer der Kundenrechnereinheiten 4 die Übungen des Sportprogramms korrekt durchführen. Als Rückmeldung hierauf können von der Lehrperson oder der Hilfsperson Instruktionen generiert und über die Hauptrechnereinheit 2 an die Kundenrechnereinheiten 4 ausgegeben werden, wodurch die Benutzer an den Kundenrechnereinheiten 4 Anleitungen oder Korrekturvorschläge erhalten. Im einfachsten Fall werden die Instruktionen durch Eingaben von Sprachbefehlen oder Sprachinformationen in die Hauptrechnereinheit 2 gebildet, die als solche an die Kundenrechnereinheiten 4 übertragen und dort ausgegeben werden. Alternativ sind auch Eingaben von Instruktionen über die Tastatur der Hauptrechnereinheit 2 möglich, die dann vorzugsweise die Hilfsperson durchführt.

Der Mikroprozessor 5 der Hauptrechnereinheit 2 bildet eine Auswerteeinheit, in welcher aus den von den Kundenrechnereinheiten 4 eingelesenen Kontrollsignalen geeignete Kenngrößen gebildet werden, die ein Maß für den Umfang und/oder die Qualität der Durchführung des Sportprogramms durch die Benutzer der Kundenrechnereinheiten 4 darstellen. Beispielswiese kann durch eine Auswertung in der Auswerteeinheit, insbesondere auch durch Einsatz von Bildverarbeitungsalgorithmen, ermittelt werden, welche und wieviel Personen an dem Sportprogramm teilnehmen. Als weitere Kenngröße kann die Dauer der Teilnahme einer Person am Sportprogramm ermittelt werden. Schließlich können durch geeignete Bildauswertungen Informationen erhalten werden, ob ein Benutzer das Sportprogramm fehlerfrei absolviert oder nicht.

### Bezugszeichenliste

- (1): Rechnersystem
- (2): Hauptrechnereinheit
- (3): Rechnernetzwerk
- (4): Kundenrechnereinheit
- (5): Mikroprozessor
- (6): Speichereinheit
- (7): Kamera
- (8): Kamera

## Patentansprüche

1. Rechnersystem (1) mit einer Anzahl von über ein Rechnernetzwerk (3) verbundenen Rechnereinheiten, wobei wenigstens einer eine Hauptrechnereinheit (2) bildenden Rechnereinheit wenigstens eine Kamera (7) zugeordnet ist, mittels derer ein von wenigstens einer Lehrperson durchgeführtes Sportprogramm aufnehmbar und über die Hauptrechnereinheit (2) und das Rechnernetzwerk (3) an weitere, Kundenrechnereinheiten (4) bildende Rechnereinheiten übertragbar ist, wobei die Rechnereinheiten einerseits Mittel zur Darstellung des Sportprogramms aufweisen und andererseits den Kundenrechnereinheiten (4) Kontrollmittel zugeordnet sind, mittels derer Kontrollsignale generierbar sind, welche angeben, ob ein Benutzer der jeweiligen Kundenrechnereinheit (4) an dem Sportprogramm teilnimmt, wobei die Kontrollsignale von den jeweiligen Kundenrechnereinheiten (4) an die Hauptrechnereinheiten (2) übertragbar sind.

2. Rechnersystem nach Anspruch 1, **dadurch gekennzeichnet, dass** ein Benutzer durch Eingabe von Login-Daten in die Kundenrechnereinheiten (4) Zugang zu dem über die Hauptrechnereinheit (2) übertragenen Sportprogramm erhält, wobei die Login-Daten als Kontrollsignale an die Hauptrechnereinheiten (2) übertragbar sind.

3. Rechnersystem nach einem der Ansprüche 1 oder 2, **dadurch gekennzeichnet, dass** jede Kundenrechnereinheit (4) wenigstens eine Kamera (8) aufweist, mittels derer die Durchführung des Sportprogramms durch den Benutzer der Kundenrechnereinheit (4) aufgezeichnet wird, und dass die hierbei in der Kamera (8) generierten Bildfolgen als Kontrollsignale von der jeweiligen Kundenrechnereinheit (4) an die Hauptrechnereinheit (2) übertragbar sind.

4. Rechnersystem nach Anspruch 3, **dadurch gekennzeichnet, dass** in Abhängigkeit der von einer Kundenrechnereinheit (4) generierten Bildfolgen Instruktionen von der Hauptrechnereinheit (2) an diese Kundenrechnereinheiten (4) übertragbar sind.

5. Rechnersystem nach Anspruch 4, **dadurch gekennzeichnet, dass** die Instruktionen in Form von Sprachinformationen übertragbar sind.

6. Rechnersystem nach Anspruch 5, **dadurch gekennzeichnet, dass** die Instruktionen in Form von Befehlsfolgen über eine Tastatur der Hauptrechnereinheit (2) eingebbar sind.

7. Rechnersystem nach einem der Ansprüche 1 bis 6, **dadurch gekennzeichnet, dass** die Hauptrechnereinheit (2) Speichermittel aufweist, in welchen Kontrollsignale der Kundenrechnereinheiten (4) gespeichert werden.

8. Rechnersystem nach einem der Ansprüche 1 bis 7, **dadurch gekennzeichnet, dass** in der Hauptrechnereinheit (2) die Kontrollsignale mehrerer Kundenrechnereinheiten (4) simultan abrufbar sind.

9. Rechnersystem nach einem der Ansprüche 1 bis 8, **dadurch gekennzeichnet, dass** in der Hauptrechnereinheit (2) die Kontrollsignale mehrerer Kundenrechnereinheiten (4) seriell abrufbar sind.

10. Rechnersystem nach einem der Ansprüche 1 bis 9, **dadurch gekennzeichnet, dass** in der Hauptrechnereinheit (2) eine Auswerteeinheit vorgesehen ist, in welcher aus den Kontrollsignalen Kenngrößen für den Umfang und/oder die Qualität der Durchführung des Sportprogramms durch einen Benutzer ableitbar sind.

11. Rechnersystem nach einem der Ansprüche 7 bis 10, **dadurch gekennzeichnet, dass** in den Speichermitteln der Hauptrechnereinheit (2) das mit der zugeordneten Kamera (7) aufgenommene Sportprogramm gespeichert wird.

12. Rechnersystem nach einem der Ansprüche 1 bis 11, **dadurch gekennzeichnet, dass** das Rechnernetzwerk (3) das Internet ist.
